# EUROPÄISCHE PATENTSCHRIFT

(11) **EP 1 233 858 B1**
(45) Veröffentlichungstag und Bekanntmachung des Hinweises auf die Patenterteilung: **26.11.2003**
(21) Anmeldenummer: 00965948.3
(22) Anmeldetag: 08.09.2000
(51) Int. Cl.: B29C 49/00

(54) **BLASFORMMASCHINE MIT ELEKTROMOTORISCHEM DIREKTANTRIEB FÜR ÖFFNUNGS UND SCHLIESSBEWEGUNG SOWIE DER VERRIEGELUNGSBEWEGUNG**
BLOW-MOLDING MACHINE PROVIDED WITH AN ELECTRIC MOTOR DIRECT DRIVE FOR OPENING, CLOSING AND LOCKING MOVEMENTS
MACHINE DE MOULAGE PAR SOUFFLAGE EQUIPEE D'UN ENTRAINEMENT DIRECT A MOTEUR ELECTRIQUE POUR LES MOUVEMENTS D'OUVERTURE, FERMETURE ET VERROUILLAGE

(30) Priorität: 11.11.1999 DE 29919885 U
(43) Veröffentlichungstag der Anmeldung: 28.08.2002
(73) Patentinhaber: MAUSER-WERKE GmbH & Co. KG, 50321 Brühl (DE); Dr. Reinold Hagen Stiftung, 53229 Bonn-Holzlar (DE); SIG Kautex GmbH & Co. KG, 53229 Bonn (DE)
(72) Erfinder: LANGOS, Peter, 53757 St. Augustin (DE); HAMLISCHER, Wolfgang, 42897 Remscheid (DE); GEILEN, Johannes, 53578 Windhagen (DE); HOLBACH, Markus, 53332 Bornheim (DE); SCHMITT, Wolfgang, 53757 St. Augustin (DE); KIEFER, Erich, 53229 Bonn (DE); FRIEDRICHS, Karsten, 53604 Bad Honnef (DE); WEILAND, Olaf, 20249 Hamburg (DE)
(86) Internationale Anmeldenummer: EP0008792
(87) Internationale Veröffentlichungsnummer: WO01034368

(56) Entgegenhaltungen:
- EP-A- 0 933 181
- DE-A- 4 443 195
- DE-A- 19 747 698
- US-A- 4 702 688

## Beschreibung

Die Erfindung betrifft eine Blasformmaschine zur Herstellung von blasgeformten Hohlkörpern aus thermoplastischem Kunststoff, mit zwei horizontal verfahrbaren Blasformhälften, die zum Öffnen und Schließen derselben mit separaten Antriebseinheiten für den Transportantrieb und für die Bewegungsabläufe der Formschließund Verriegelungseinrichtung ausgestattet sind.
Eine Blasformmaschine der hier angesprochenen Bauart ist z. B. aus der Druckschrift DE 34 16 871 C2 (von Mauser) bekannt. Bei dieser bekannten Blasformmaschine sind die separaten Antriebe für den Fahrantrieb als Schnelltransport (Eilgang) für eine schnelle Artikelentnahme und die Schließantriebe (Kraftantriebe) für die Verriegelung und das Zuhalten der Blasformhälften hydraulisch ausgelegt. Die holmenlose Bauart dieser in den letzten 15 Jahren vielfach gebauten Blasformmaschine hat sich bestens bewährt. Für besondere Anwendungszwecke wie z. B. eine Reinraumfertigung sind hydraulische Antriebe jedoch nicht gut geeignet.

Es ist Aufgabe der Erfindung, für eine moderne Blasformmaschine eine neue Formschließ- und Verriegelungseinrichtung zur Verriegelung der Formträgerplatten bzw. der Blasformhälften anzugeben.
Diese Aufgabe wird erfindungsgemäß mit den kennzeichnenden Merkmalen des Patentanspruches 1 gelöst. Die Besonderheit bei der vorliegenden Erfindung besteht darin, daß die Antriebseinheit für die Formschließ- und Verriegelungseinrichtung als elektromotorischer Direktantrieb ausgebildet ist.
in den Unteransprüchen sind weitere vorteilhafte Ausgestaltungsvarianten der vorliegenden Erfindung enthalten.
Mit der erfindungsgemäßen Blasformmaschine werden im Vergleich zu herkömmlicher Bauart folgende Vorteile erzielt:
- geringerer Energieverbrauch gegenüber einer Blasformmaschine mit Hydraulikantrieb,
- größere Ölströme durch große Zylinderflächen und entsprechend große Wege werden vermieden,
- günstigere Wartungskosten, da beispielsweise kein Hydrauliköl nach Wartungsintervallen getauscht werden muß,
- geringere Geräuschentwicklung,
- höhere Flexibilität und Steuerbarkeit in den Bewegungen,
- bessere Wiederholgenauigkeit (keine Warmlaufphase) und
- Eignung für Reinraumfertigung, da z. B. keine Ölleckagen auftreten können.

In Ausgestaltung der Erfindung ist vorgesehen, daß zur Herstellung von im wesentlichen rotationssymmetrischen Hohlkörpern wenigstens zwei Schließelemente mit elektrischem Direktantrieb vorgesehen sind, die symmetrisch, seitlich neben den Blasformhälften bzw. an den Formträgerplatten oder damit verbundenen Rahmenteilen befestigt sind, während zur Herstellung von technischen Blasteilen bzw. im wesentlichen rotationsunsymmetrischen Hohlkörpern wenigstens drei Schließelemente mit elektrischem Direktantrieb vorgesehen sind, die unsymmetrisch, seitlich neben den Blasformhälften bzw. direkt an den Formträgerplatten oder damit verbundenen Rahmenteilen befestigt sind. Dabei besteht jedes Schließelement der Formschließ- und Verriegelungseinrichtung aus einer aktiven und einer passiven Hälfte, die etwa in Formtrennnahtebene miteinander kuppelbar sind, wobei der auf der aktiven Hälfte für das Schließen und Verriegeln der Blasformhälften angeordnete Direktantrieb als elektrischer Spindelantrieb, vorzugsweise mit Trapezgewinde, ausgebildet ist.

Die erfindungsgemäße Blasformmaschine mit separaten Antriebseinheiten für den Transportantrieb (= Fahrbetrieb-Eilgang ohne besonderen Kraftaufwand) und für die Bewegungsabläufe der Formschließ- und Verriegelungseinrichtung (mit hohem Kraftaufwand) zeichnet sich durch folgende, in vorteilhafter Weise miteinander kombinierbare Merkmale weiterhin dadurch aus, daß
- die Formschließ- und Verriegelungseinrichtung für Blasformen zur Herstellung von großvolumigen Hohlkörpern, wie z. B. 220 Liter Kunststoff-Fässern, vier oder mehr symmetrisch seitlich neben den Blasformhälften bzw. seitlich an den Formträgerplatten angebrachte baugleiche Schließelemente umfaßt,
- der Formschließ- und Verriegelungseinrichtung ein Kraftspeicher zugeordnet ist, welcher bei verriegelten Blasformhälften eine gegen den Blasdruck wirkende Vorspannung aufrecht erhält,
- der Kraftspeicher durch Federelement-Pakete gebildet wird,
- der Kraftspeicher durch gezielt elastisch verformbare Bereiche der Formaufspannplatten oder der dahinter angeordneten parallelen Rahmenplatten ausgebildet ist,
- jedes Schließelement der Formschließ- und Verriegelungseinrichtung mit einem elektrischen Spindelantrieb für das Schließen und Verriegeln der Blasform ausgestattet ist, wobei der Spindelantrieb als Roltenumlauf-Spindelgetriebe ausgebildet ist, und zwar
   - a.) mit verschiebbarer Spindel oder
   - b.) mit drehfest gelagerter Spindel, wobei die Rollenumlaufmutter auf der Spindel verschiebbar vom Motor angetrieben ist,
- die Rollenumlaufmutter (z. B. in einem Lagerring) jeweils an einer Blasformhälfte bzw. Formaufspannplatte befestigt und in einer derartigen Weise elastisch gelagert ist, z. B. durch eine "schwimmende Lagerung", daß Winkelabweichungen, die durch die Spindel bzw. im Zusammenwirken mit der Kupplung erzeugt werden können, ausgleichbar sind, oder aus der Deformation der Formaufspannplatten auftretende Biegespannungen kompensiert werden können,
- die elastisch-gelenkig gelagerte drehbare Rollenumlaufmutter über eine Ausgleichskupplung mit dem Motor bzw. dessen Getriebe verbunden ist,
- das Gegenstück der Schließelemente, welches mit der gegenüberliegenden Spindel koppelbar ist, ebenfalls biegeelastisch an der jeweiligen gegenüberliegenden Blasformhälfte bzw. der Formenträgerplatte gelagert ist,
- diese besonderen Elastik-Lagerungen der Schließelemente durch Biegung, Temperatureinflüsse oder dergleichen entstehende Winkelfehler ausgleichen,
- die Lagerung aus einer Kugelpfanne und einem darin angeordneten elastischen Abstützelement gebildet wird, wobei das Abstützelement in einem räumlichen Abstand von der Kugelpfanne, zwischen Kugelpfanne und Kupplungselement wirkt, um die Spindel in der Mittellage zu halten,
- das Abstützelement aus einem elastisch verformbaren Kunststoffring (z. B. Teflon) besteht, so daß das im allgemeinen gegen Winkelfehler sehr empfindlich reagierende Rollenumlauflager gegen erhöhten Verschleiß geschützt ist,
- der elektrische Antriebsmotor eine Feststell-Bremse aufweist, oder im Antriebsstrang bis zum Mutter-Spindelgetriebe eine Bremse angeordnet ist, welche derart anlegbar ist, daß sich die Blasformhälften im geschlossenen, vorgespannten Zustand befinden und kein ständiger Energiebedarf für die kraftaufwendige Zuhaltung benötigt wird, und daß
- der Antriebsmotor ein Servomotor ist, welcher bei geschlossener Blasform ein ausreichend hohes Drehmoment zum Zuhalten der Blasformhälften (z. B. auch ohne Federspeicher) erzeugt.

In weiterer vorteilhafter Ausgestaltung der erfindungsgemäßen Blasformmaschine ist vorgesehen, daß
- der Transportantrieb zum Schließen und Öffnen der Blasformhälften ebenfalls mit einem elektromotorischen Direktantrieb ausgestattet ist,
- der Transportantrieb mit einer einteiligen, einen links- und einen rechtsgängigen Gewindeabschnitt aufweisenden Spindel ausgestattet ist, die zur gegenläufigen Bewegung der Blasformhälften von dem elektrischen Antrieb drehbar angetrieben wird,
- der Transportantrieb für jede Blasformhälfte mit einer, ein Mutter-Gewinde-Getriebe aufweisenden Spindel ausgestattet ist, wobei jede Spindel oder jede Gewindemutter durch einen eigenen Motor angetrieben sein kann,
- der Transportantrieb als um zwei Umlenkräder umlaufend geführte Kette, Zahnriemen, Drahtseil oder dergleichen Mitteln ausgeführt ist und jede Blasformhälfte unmittelbar oder mittelbar mit einem der gegenläufigen Trume (Zugelemente) verbunden ist.

Die erfindungsgemäße Blasformmaschine mit elektrischen Direktantrieben bietet im Vergleich zu konventionellen Hydraulik-Antrieben eine wesentlich höhere Wiederholgenauigkeit für definierte Anfahrpunkte; die Maschine besitzt eine hohe Flexibilität und ist durch schnelle Stabilisierung des Betriebszustandes sofort einsatzbereit, weil keine An- und Ablaufphase erforderlich ist. Es treten keine thermischen Energieverluste auf und während des wichtigsten Arbeitsganges, nämlich dem kraftaufwendigen Zuhalten der Blasformhälften, erfolgt so gut wie kein Energieverbrauch. Dies wird in vorteilhafter Weise durch die Bremse des Antriebsmotors und das Federpaket erreicht. Die Bremse hält den Antriebsmotor in Zuhalteposition fest, so daß kein elektrisches Drehmoment aufgebracht werden muß (kein elektr. Energieverbrauch), die Federpakete wirken dem Blasdruck entgegen und verhindern ein Aufweiten der Blasformhälften. Die vorteilhaften Wälzführungen bzw. Kugelumlauf-Führungen gewährleisten einen hohen Wirkungsgrad von über 70 % bei geringeren Verlusten. Im Gegensatz dazu benötigt eine Hydraulikmaschine aufgrund der Temperaturabhängigkeit des Hydrauliköls immer eine Warmlaufphase und im Betriebszustand muß ständig Wärme abgeführt werden, wodurch thermische Energieverluste entstehen.

Die vorliegende Erfindung wird nachfolgend anhand eines in den Zeichnungen teilweise nur schematisch dargestellten Ausführungsbeispieles näher erläutert und beschrieben. Es zeigen:
- Figur 1: eine erfindungsgemäße Schließeinheit in Seitenansicht,
- Figur 2: eine Draufsicht auf eine erfindungsgemäße Schließeinheit,
- Figur 3: eine Prinzipskizze eines Schließelementes (Aktivseite),
- Figur 4: eine Prinzipskizze eines Schließelementes (Passivseite) und
- Figur 5: eine Prinzipdarstellung einer Rollenumlaufspindel

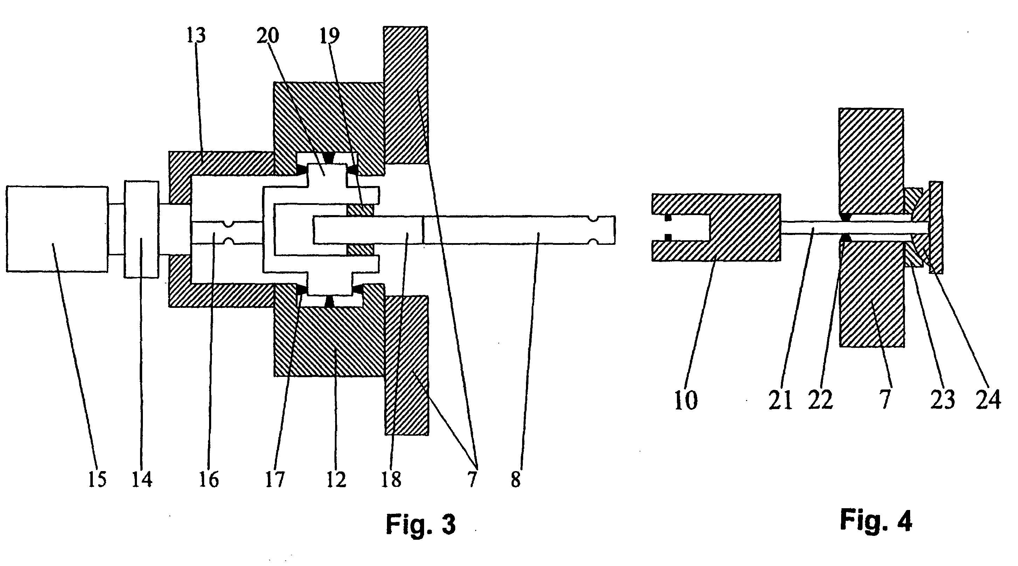

Die Konstruktion des Oberbaues der Blasformmaschine, d. h. der bewegten Teile sieht folgendermaßen aus :
Die Formträger bestehen jeweils aus zwei parallel zueinander angeordneten Platten 7, die zu einem großflächig gestalteten kastenförmigen Tragrahmen verbunden sind (Schweißkonstruktion). Die jeweils äußeren Platten sind dabei mit waagerecht angeordneten Stegen biegesteif ausgeführt. Eine Einheit ist mit einer Fußplatte und vier Rippenblechen verschweißt. Die Formträger laufen auf zwei Kugelumlauf-Führungslinien 5 auf dem Grundrahmen 4. Jeder Formträger kann einen Hub von 600 mm symmetrisch zur Mittelachse ausführen. Die Anschlüsse sämtlicher Schnellantriebe an die zu bewegenden Massen (Form-träger) sind in Modulbauweise so ausgeführt, daß sie ohne großen Ausrichteaufwand angekoppelt bzw. entkoppelt werden können. An den äußeren Platten greifen im Bereich der Stege jeweils zwei Schließelemente 8, auch Kraftriegel genannt, an. Diese Kraftriegel 8 entsprechen bei konventionellen Blasformmaschinen derartiger Bauart den Hydraulikkolben- und -Zylindereinheiten.
Die Kraftriegel 8 sind einachsig kardanisch, d. h. zur Kraftübertragung axial starr aber zum Ausgleich von Winkelfehlem biegeelastisch (oder winkelelastisch) an den Platten 7 aufgehängt. Je eine Seite ist durch eine Trapezgewindespindel und ein Schneckenradgetriebe angetrieben. Die jeweils andere Seite ist nicht angetrieben, jedoch ebenfalls elastisch aufgehängt. Die Kraftriegel 8 sind zum Zwecke des Auseinanderfahrens der beiden Formhälften 9 mit lösbaren Kupplungselementen 10 versehen. Die Kraftriegel 8 sind entsprechend stabil ausgelegt, da sie die Kraft für das Abquetschen und das Zuhalten während des Blasformvorganges aufbringen müssen.
Ein Schließelement bzw. Kraftriegel weist ein besonderes Merkmale auf : Er ist als eigene Baueinheit ausgeführt und dadurch einfach montierbar bzw. demontierbar ausgebildet. Der Vorteil besteht darin, daß die Riegel an einem geeigneten Arbeitsplatz vormontiert werden können, um danach komplett als Montageeinheit in das Schließgestell eingesetzt zu werden.
Das Getriebe 14 mit Elektromotorantrieb 15 ist über eine Bogenzahnkupplung 13 mit einer Spindelmutter 19 verbunden. Diese angetriebene und dadurch rotierende Spindelmutter 19 (Rotationsbewegung) treibt die stehende Spindel 18 an (Translationsbewegung), die wiederum über ein Zapfenstück in die Kopplungszylinder 10 der passiven Seite greifen. Insgesamt sind in dieser Ausführungsform vier Riegel eingesetzt, um die Kraft symmetrisch und gleichmäßig aufzubringen, bzw. über ein geschlossenes Kräfte-Viereck in die Formträgerplatten 7 ableiten zu können. Der mechanische und elektrische Aufbau des erfindungsgemäßen Schließgestells sieht folgendermaßen aus :
Die Schließeinheit arbeitet nach dem Prinzip der getrennten Antriebskonzepte für die Bewegung der Blasformhälften zum Entformen des Artikels (schneller Verfahrantrieb) und dem Abquetschen des Vorformlinges (Schlauch) und zum Zuhalten der Blasformhälften während des Aufblasens (langsamer Schließantrieb). Für den Verfahrantrieb können z. B. ein Kettenantrieb bzw. Riemenantrieb zum Einsatz kommen, die mit nur einem Motor (vorzugsweise Elektromotor) angetrieben werden und demnach nur symmetrische Bewegungen zulassen. Vorzugsweise werden aber Spindelantriebe eingesetzt, wobei für die vorliegende Schließeinheit vorzugsweise zwei getrennte Spindeln für jede Aufspannplatte vorgesehen werden. Damit lassen sich dann die Aufspannplatten auch unsymmetrisch zueinander verfahren. Als Verfahrantriebe können jedoch auch elektrische Linearmotoren vorgesehen sein.

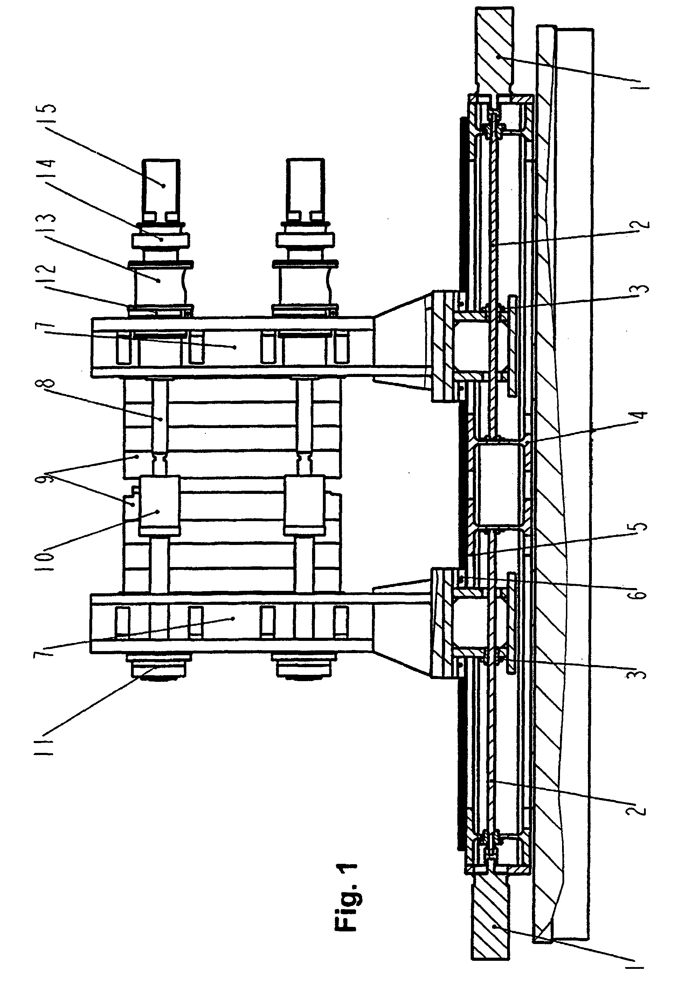

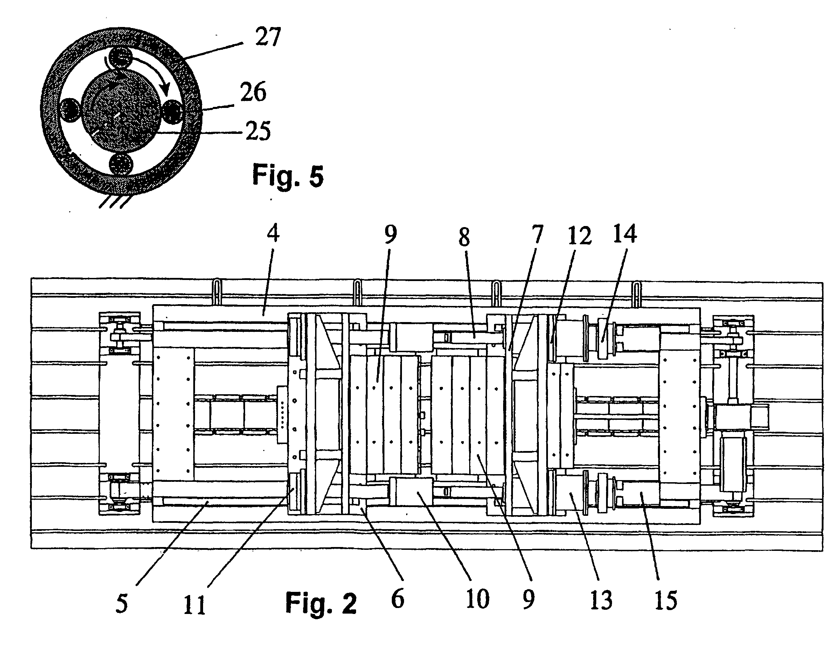

In Figur 1 ist der schematische Aufbau in einer Ausführungsform mit vier Spindeln dargestellt. Die Schließantriebe sind als kompakte Einheit mit Motor 15, Getriebe 14, Kupplung 13, Spindelmutter 19, Spindel 18 und Zuhalte-Riegel 8 ausgeführt und können ohne Zerlegung als Montageeinheit auf die Formenaufspannplatten montiert bzw. demontiert werden. In Figur 2 ist der Schließgestell-Aufbau noch einmal in einer Draufsicht verdeutlicht.
Der prinzipielle Aufbau eines Schließriegels zum Verriegeln bzw. Zuhalten der beiden Blasformhälften gegeneinander ist in Figur 3 und Figur 4 gezeigt. Die Spindelmutter 19 ist in einem Lagerring 12 mit Federn 17 schwimmend gelagert, so daß von den Aufspannplatten oder Riegeln herrührende Biegespannungen ausgeglichen und nicht auf das Spindel-Mutter-System übertragen werden und einen vorzeitigen Verschleiß verursachen. Die Spindel 18, 8 ist so ausgelegt, daß sie die Kraft von ca. 500 kN (mit einer Zuhaltekraft von 2000 kN für das Gesamtsystem) aufnehmen kann. Als elektrische Antriebe sind Servomotoren mit integrierten Resolvem eingesetzt. Die Resolver stellen inkrementelle Wegaufnehmer für die Maschinen-Steuerungs- und Regelungsfunktionen dar. Für die Positionierung der bewegten Teile wird ebenfalls das Signal der Resolver genutzt, so daß auf eine zusätzliche externe und konventionelle Wegerfassung verzichtet werden kann.

Funktionsbeschreibung der Schließeinheit beim Koppelvorgang :
Der Verfahrantrieb 1 fährt die Formhälften 9 mit hoher Geschwindigkeit (ca. 0,8 m/s) zu, bis zwischen den Formhälften 9 ein Abstand von ca. 35 mm (etwa die doppelte Schlauchwanddicke) verbleibt. Von diesem Zeitpunkt an fahren die Aufspannplatten 7 mit reduzierter Geschwindigkeit (ca. 10 mm/s Abquetschen) weiter zu. Die Riegel 8 tauchen in die Kopplungszylinder 10 ein. Gleichzeitig werden die Schließantriebe 15 beschleunigt, bis sie die gleiche Geschwindigkeit haben wie der Verfahrantrieb 1 bzw. geringfügig langsamer fahren als der Verfahrantrieb 1, um ein sicheres Einkoppeln der Riegel 8 zu erreichen. Die Kopplungszylinder 10 verriegeln dabei die Riegel 8 sofort mittels Federkraft, wenn die Riegel 8 weit genug eingetaucht sind. Mit dem Verriegeln wird ein Endschalter betätigt; mit diesem Signal wird der Verfahrantrieb 1 drehmomentlos geschaltet, bzw. bei der Ausführung des Verfahrantriebes als Spindelantrieb wird nur eine Spindel drehmomentlos geschaltet, damit die zweite Spindel die Blasformhälften in Formtrennebene zentriert halten kann.
Über das Beschleunigen der Schließantriebe 15 auf die gleiche Geschwindigkeit wie die des Verfahrantriebes 1 hinaus wird keine weitere besondere Regelung eingesetzt. Ein sicheres Verriegeln wird durch das Endlagenspiel der Kopplungszylinder 10, das beim Aufsynchronisieren genutzt wird, erreicht. Sind alle Kopplungszylinder 10 verriegelt, wird die Bewegung bis Formschluß sowie die Kraft zum Abquetschen des Kunststoffschlauches nur noch von den elektrischen Schließantrieben aufgebracht. Dabei werden die Antriebe 15 lagegeregelt zugefahren, bis die Antriebe 15 ein voreingestelltes Drehmoment erreichen. Danach sinkt die Drehzahl bei gleichbleibendem Drehmoment bis auf Null ab, wobei gleichzeitig eine Bremse eingreift. Dann werden die Motoren 15 drehmomentlos geschaltet (Kraftentlastung) und damit der Strom im Motor reduziert. Somit wird während des Aufblasens des Artikels keine elektrische Energie in den Antrieben 15 benötigt.
Im Betrieb bremsen die Federpaket-Kraftspeicher ein Aufeinanderfahren der Blasformhälften ab, wobei der Schlauch nachgibt, und bewirken ein Nachrücken der Blasformhälften gegen das Aufweitebestreben durch den einsetztenden Blasdruck. Kurz vor dem Öffnen der Formhälften 9 wird die Regelung des Drehmomentes wieder freigegeben, die Bremse wird gelöst und die Formhälften werden langsam aufgefahren. Nachdem sich die Aufspannplatten 7 und die Riegel 8 entspannt haben, werden die Riegel 8 aus den Kopplungszylindem 10 mittels Druckluft freigegeben. Der Schließantrieb 15 kann absynchronisiert werden und der Verfahrantrieb 1 fährt die Formhälften 9 im Eilgang zur Artikelentnahme weit auseinander. Der Aufwand für die Steuerungs-Sensorik ist hierbei vergleichsweise gering, weil bei den elektrischen Antrieben die Steuerungs-Sensorik in vorteilhafter Weise direkt im Motor selbst angeordnet sind. Dadurch ergeben sich weniger Probleme bei der Einstellung der Sensorik, sowie beim Bau und der Wartung der Maschine.
Die Flexibilität der Blasformmaschine zeichnet sich u. a. auch in einer hohen Anpassungsfähigkeit für besondere Anforderungen (z. B. unsymmetrische Blasteile) dadurch aus, daß sie durch die Modulbauweise für symmetrische und unsymmetrische Bauart mit unterschiedlicher Anzahl der Schließelemente ( z. B. zwei, vier, sechs oder drei, fünf) geeignet bzw. umrüstbar ist.

Aus obiger Beschreibung der erfindungsgemäßen Blasformmaschine werden die herausragenden Vorteile und die uneingeschränkte Einsetzbarkeit eines vollelektrisch angetriebenen Schließgestelles offenkundig. In hervorragender Weise lassen sich vorwählbare Geschwindigkeitsprofile mit dem Prozeßablauf angepaßter Fahrdynamik einstellen.

### Bezugsziffernliste

- **1**: Motor Transportantrieb
- **2**: Kugelumlaufspindel
- **3**: Spindelmutter
- **4**: Grundrahmen
- **5**: Linearführungen
- **6**: Führungswagen
- **7**: Aufspannplatte
- **8**: Schließelement (Riegel)
- **9**: Formhälfte
- **10**: Kopplungszylinder
- **11**: Gelenkige Lagerung (passive Seite)
- **12**: Gelenkige Lagerung (aktive Seite)
- **13**: Ausgleichskupplungs-Gehäuse
- **14**: Getriebe
- **15**: Motor Schließantrieb
- **16**: Ausgleichskupplung
- **17**: Gelenkige Lagerungsverbindung
- **18**: Spindel
- **19**: Spindelmutter
- **20**: Drehring
- **21**: Zylinderstange
- **22**: Loslager-Verbindung
- **23**: Axial-Gelenklagerschale
- **24**: Axial-Gelenklagerkugel
- **25**: Spindel-Stange
- **26**: Umlauf-Rollen
- **27**: Getriebe-Gehäuse

## Patentansprüche

1. Blasformmaschine zur Herstellung von blasgeformten Hohlkörpern aus thermoplastischem Kunststoff, mit zwei horizontal verfahrbaren Blasformhälften (9), die zum Öffnen und Schließen derselben mit separaten Antriebseinheiten (1, 15) für den Transportantrieb und für die Bewegungsabläufe der Formschließ- und Verriegelungseinrichtung ausgestattet sind,
**dadurch gekennzeichnet, daß**
die Antriebseinheit (15) für die Schließelemente der Formschließ- und Verriegelungseinrichtung als elektromotorischer Direktantrieb ausgebildet ist.

2. Blasformmaschine nach Anspruch 1,
**dadurch gekennzeichnet, daß**
zur Herstellung von im wesentlichen rotationssymmetrischen Hohlkörpern wenigstens zwei Schließelemente mit elektrischem Direktantrieb (15) vorgesehen sind, die symmetrisch, seitlich neben den Blasformhälften (9) bzw. an den Formträgerplatten (7) oder damit verbundenen Rahmenteilen befestigt sind.

3. Blasformmaschine nach Anspruch 1,
**dadurch gekennzeichnet, daß**
zur Herstellung von technischen Blasteilen bzw. im wesentlichen rotationsunsymmetrischen Hohlkörpern wenigstens drei Schließelemente mit elektrischem Direktantrieb (15) vorgesehen sind, die unsymmetrisch, seitlich neben den Blasformhälften (9) bzw. an den Formträgerplatten (7) oder damit verbundenen Rahmenteilen befestigt sind.

4. Blasformmaschine nach Anspruch 1, 2 oder 3,
**dadurch gekennzeichnet, daß**
jedes Schließelement der Formschließ- und Verriegelungseinrichtung aus einer aktiven und einer passiven Hälfte besteht, die etwa in Formtrennnahtebene miteinander kuppelbar sind, wobei der auf der aktiven Hälfte für das Schließen und Verriegeln der Blasformhälften angeordnete Direktantrieb (15) als elektrischer Spindelantrieb ausgebildet ist.

5. Blasformmaschine nach Anspruch 1, 2, 3 oder 4,
**dadurch gekennzeichnet, daß**
der Spindelantrieb als Rollenumlauf-Spindelgetriebe (25, 26, 27) ausgebildet ist.

6. Blasformmaschine nach Anspruch 5,
**dadurch gekennzeichnet, daß**
das Rollenumiauf-Spindelgetriebe mit verschiebbarer Spindel (25) ausgestattet ist, wobei die Rollenumlaufmutter (19) auf die Spindel (18) bezogen ortsfest vom Motor (15) angetrieben ist.

7. Blasformmaschine nach Anspruch 5,
**dadurch gekennzeichnet, daß**
das Rollenumlauf-Spindelgetriebe mit drehfest gelagerter Spindel ausgestattet ist, wobei die Rollenumlaufmutter auf der Spindel verschiebbar vom Motor angetrieben ist.

8. Blasformmaschine nach wenigstens einem der vorhergehenden Ansprüche 1 bis 7,
**dadurch gekennzeichnet, daß**
die Formschließ- und Verriegelungseinrichtung einen Kraftspeicher aufweist, welcher bei verriegelten Blasformhälften (9) eine gegen den Blasdruck wirkende Vorspannung aufbringt.

9. Blasformmaschine nach Anspruch 8,
**dadurch gekennzeichnet, daß**
der Kraftspeicher durch Federelement-Pakete gebildet wird.

10. Blasformmaschine nach Anspruch 8,
**dadurch gekennzeichnet, daß**
der Kraftspeicher durch gezielt elastisch verformbare Bereiche der Formaufspannplatten oder der dahinter angeordneten Rahmenplatten ausgebildet ist.

11. Blasformmaschine nach wenigstens einem der vorhergehenden Ansprüche 1 bis 10,
**dadurch gekennzeichnet, daß**
die Rollenumlaufmutter (z. B. in einem Lagerring 12) jeweils an einer Blasformhälfte (9) bzw. Formaufspannplatte (7) befestigt und in einer derartigen Weise elastisch gelagert ist, daß Winkelabweichungen, die z. B. durch die Spindel (18) im Zusammenwirken mit der Kupplung (10) erzeugt werden können, oder durch Biegespannungen aus der Deformation der Formenaufspannplatten (7) auftreten können, ausgleichbar sind, bzw. kompensiert werden können.

12. Blasformmaschine nach wenigstens einem der vorhergehenden Ansprüche 1 bis 11,
**dadurch gekennzeichnet, daß**
das passive Gegenstück der Schließelemente, welches mit der gegenüberliegenden Spindel (8,18) koppelbar ist, ebenfalls elastisch an der jeweiligen Blasformhälfte (9) bzw. Formträgerplatte (7) gelagert ist.

13. Blasformmaschine nach wenigstens einem der vorhergehenden Ansprüche 1 bis 12,
**dadurch gekennzeichnet, daß**
die Antriebseinheit (1) für den Transportantrieb (Eilgang) zum Schließen und Öffnen der Blasformhälften (9) ebenfalls als elektromotorischer Direktantrieb, vorzugsweise mit einer Gewindespindel mit hoher Gewindesteigung, ausgebildet ist.

14. Blasformmaschine nach wenigstens einem der vorhergehenden Ansprüche 1 bis 13,
**dadurch gekennzeichnet, daß**
der elektrische Antriebsmotor (15) eine Feststell-Bremse aufweist, oder im Antriebsstrang bis zum Mutter-Spindelgetriebe eine Bremse vorgesehen ist, welche derart anlegbar ist, daß sich die geschlossenen Blasformhälften (9) im vorgespannten Zustand befinden und kein ständiger Energiebedarf für die kraftaufwendige Zuhaltung benötigt wird.

## Claims

1. Blow-moulding machine for the production of blow-moulded hollow bodies from thermoplastic, with two horizontally moveable blow-mould halves (9) which, for opening and closing these, are equipped with separate drive units (1, 15) for the transport drive and for the movement sequences of the mould-closing and latching device, **characterized in that** the drive unit (15) for the closing elements of the mould-closing and latching device is designed as an electromotive direct drive.

2. Blow-moulding machine according to Claim 1, **characterized in that**, for the production of essentially rotationally symmetrical hollow bodies, at least two closing elements with an electric direct drive (15) are provided, which are symmetrically fastened laterally beside the blow-mould halves (9) or to the mould carrier plates (7) or frame parts connected to the latter.

3. Blow-moulding machine according to Claim 1, **characterized in that**, for the production of industrial blown parts or of essentially rotationally asymmetric hollow bodies, at least three closing elements with an electric direct drive (15) are provided, which are asymmetrically fastened laterally beside the blow-mould halves (9) or to the mould carrier plates (7) or frame parts connected to the latter.

4. Blow-moulding machine according to Claim 1, 2 or 3, **characterized in that** each closing element of the mould-closing and latching device consists of an active and of a passive half which can be coupled to one another approximately in the mould parting-seam plane, the direct drive (15) arranged on the active half for closing and latching the blow-mould halves being designed as an electric spindle drive.

5. Blow-moulding machine according to Claim 1, 2, 3 or 4, **characterized in that** the spindle drive is designed as a roller-type rotary spindle mechanism (25, 26, 27).

6. Blow-moulding machine according to Claim 5, **characterized in that** the roller-type rotary spindle mechanism is equipped with a displaceable spindle (25), the roller-type rotary nut (19) being driven by the motor (15) fixedly with respect to the spindle (18).

7. Blow-moulding machine according to Claim 5, **characterized in that** the roller-type rotary spindle mechanism is equipped with a spindle mounted fixedly in terms of rotation, the roller-type rotary nut being driven by the motor displaceably on the spindle.

8. Blow-moulding machine according to at least one of the preceding Claims 1 to 7, **characterized in that** the mould-closing and latching device has a force accumulator which, with the blow-mould halves (9) latched, applies a prestress acting counter to the blowing pressure.

9. Blow-moulding machine according to Claim 8, **characterized in that** the force accumulator is formed by spring element assemblies.

10. Blow-moulding machine according to Claim 8, **characterized in that** the force accumulator is formed by specifically elastically deformable regions of the mould clamping plates or of the frame plates arranged behind the latter.

11. Blow-moulding machine according to at least one of the preceding Claims 1 to 10, **characterized in that** the roller-type rotary nut is fastened (for example, in a bearing ring 12) in each case on a blow-mould half (9) or a mould clamping plate (7) and is mounted elastically in such a way that angular deviations, which may be brought about, for example, by the spindle (18) in cooperation with the coupling (10) or may occur due to bending stresses arising from the deformation of the mould clamping plates (7), can be balanced out or can be compensated.

12. Blow-moulding machine according to at least one of the preceding Claims 1 to 11, **characterized in that** the passive counterpiece of the closing elements, which is coupleable to the opposite spindle (8, 18), is likewise mounted elastically on the respective blow-mould half (9) or mould carrier plate (7).

13. Blow-moulding machine according to at least one of the preceding Claims 1 to 12, **characterized in that** the drive unit (1) for the transport drive (rapid motion) for closing and opening the blow-mould halves (9) is likewise designed as an electromotive direct drive, preferably with a threaded spindle having a high thread pitch.

14. Blow-moulding machine according to at least one of the preceding Claims 1 to 13, **characterized in that** the electric drive motor (15) has a locking brake, or, in the drive train up to the nut/spindle mechanism, a brake is provided, which can be applied in such a way that the closed blow-mould halves (9) are in the prestressed state and there is no constant energy requirement for forcibly keeping them shut.

## Revendications

1. Machine à souffler pour la fabrication de corps creux en matière synthétique thermoplastique moulés par soufflage, avec deux moitiés de moule de soufflage (9) déplaçables horizontalement, lesquelles sont pourvues d'unités de commande (1, 15) distinctes pour leur ouverture et fermeture pour l'entraînement du transport et pour les processus de mouvement du dispositif de fermeture et de verrouillage du moule, **caractérisée en ce que** l'unité de commande (15) pour les éléments de fermeture du dispositif de fermeture et de verrouillage du moule est développée sous la forme d'un entraînement direct électromoteur.

2. Machine à souffler selon la revendication 1, **caractérisée en ce que** pour la fabrication de corps creux essentiellement à symétrie de révolution, au moins deux éléments de fermeture avec entraînement direct électrique (15) sont prévus, lesquels sont fixés symétriquement, latéralement à côté des moitiés de moule de soufflage (9) ou sur les plaques porte moule (7) ou des parties de cadre qui y sont reliées.

3. Machine à souffler selon la revendication 1, **caractérisée en ce que** pour la fabrication de pièces de soufflage techniques ou de corps creux essentiellement à dissymétrie de révolution, au moins trois éléments de fermeture avec entraînement direct électrique (15) sont prévus, lesquels sont fixés de manière dissymétrique, latéralement à côté des moitiés de moule de soufflage (9) ou sur les plaques porte moule (7) ou des parties de cadre qui y sont reliées.

4. Machine à souffler selon la revendication 1, 2 ou 3, **caractérisée en ce que** chaque élément de fermeture du dispositif de fermeture et de verrouillage du moule se compose d'une moitié active et d'une moitié passive, lesquelles peuvent être couplées approximativement sur le plan du joint de séparation du moule, moyennant quoi l'entraînement direct (15) pour la fermeture et le verrouillage des moitiés de moule de soufflage aménagé sur la moitié active est développé sous la forme d'une commande électrique de broches.

5. Machine à souffler selon la revendication 1, 2, 3 ou 4, **caractérisée en ce que** la commande de broches est développée sous la forme d'un engrenage de broches à circulation de rouleaux (25, 26, 27).

6. Machine à souffler selon la revendication 5, **caractérisée en ce que** l'engrenage de broches à circulation de rouleaux est pourvu d'une broche. (25) mobile, moyennant quoi l'écrou à circulation de rouleaux (19) est entraîné par le moteur (15) de manière fixe par rapport à la broche (18).

7. Machine à souffler selon la revendication 5, **caractérisée en ce que** l'engrenage de broches à circulation de rouleaux est pourvu d'une broche logée de manière à résister à la torsion, moyennant quoi l'écrou à circulation de rouleaux sur la broche est entraîné de manière mobile par le moteur.

8. Machine à souffler selon au moins l'une quelconque des revendications précédentes 1 à 7, **caractérisée en ce que** le dispositif de fermeture et de verrouillage de moule présente un accumulateur d'énergie lequel, lorsque les moitiés de moule de soufflage (9) sont verrouillées, apporte une précontrainte agissant à l'encontre de la pression de soufflage.

9. Machine à souffler selon la revendication 8, **caractérisée en ce que** l'accumulateur d'énergie est formé par des blocs à éléments de ressort.

10. Machine à souffler selon la revendication 8, **caractérisée en ce que** l'accumulateur d'énergie est formé par des zones ciblées élastiquement déformables des plaques de bridage du moule, ou des plaques de cadre aménagées derrière.

11. Machine à souffler selon au moins l'une quelconque des revendications précédentes 1 à 10, **caractérisée en ce que** l'écrou à circulation de rouleaux (par exemple dans une bague de roulement 12) est respectivement fixé sur une moitié de moule de soufflage (9) ou plaque de bridage du moule (7) et est logé élastiquement de manière à ce que des écarts angulaires pouvant par exemple être produits par la,broche (18) en agissant de commun avec le dispositif d'accouplement (10), ou se produire par des contraintes de flexion en raison de la déformation des plaques de bridage de moule (7), sont neutralisables ou peuvent être compensés.

12. Machine à souffler selon au moins l'une quelconque des revendications précédentes 1 à 11, **caractérisée en que** le pendant passif des éléments de fermeture qui peut être couplé avec la broche (8, 18) située en face, est également logé élastiquement sur respectivement la moitié de moule de soufflage (9) ou plaque porte moule (7).

13. Machine à souffler selon au moins l'une quelconque des revendications précédentes 1 à 12, **caractérisée en ce que** l'unité de commande (1) pour l'entraînement du transport (rapide) pour fermer et ouvrir les moitiés de moule de soufflage (9) est également développée sous la forme d'un entraînement direct électromoteur, de préférence avec une broche filetée avec un pas de filetage élevé.

14. Machine à souffler selon au moins l'une quelconque des revendications précédentes 1 à 13, **caractérisée en ce que** le moteur d'entraînement électrique (15) présente un frein de stationnement, ou qu'un frein est prévu dans la corde motrice jusqu'à l'entraînement de l'écrou-broche, lequel peut être placé de manière à ce que les moitiés de moule de soufflage (9) fermées se trouvent à l'état précontraint et qu'aucun besoin constant en énergie ne soit nécessaire pour le maintien fermé nécessitant beaucoup d'effort.
